# EUROPEAN PATENT SPECIFICATION

(11) **EP 3 957 187 B1**
(45) Date of publication and mention of the grant of the patent: **24.12.2025**
(21) Application number: 20192110.3
(22) Date of filing: 21.08.2020
(51) Int. Cl.: A23B 2/50, A23B 70/00, A23C 9/12, A23C 19/14, A23L 5/30, C12G 1/02, C12H 1/16, C12H 1/22

(54) **ACOUSTIC TREATMENT OF CHEESE**
AKUSTISCHE BEHANDLUNG VON KÄSE
TRAITEMENT ACOUSTIQUE DE FROMAGE

(43) Date of publication of application: 23.02.2022
(73) Proprietor: Käsehaus K3, 3400 Burgdorf (CH)
(72) Inventor: Wampfler, Beat, 3400 Burgdorf (CH)
(74) Representative: Grünecker Patent- und Rechtsanwälte PartG mbB

(56) References cited:
- EP-A1- 0 477 774
- EP-A1- 1 875 813
- CN-B- 103 205 354
- US-A1- 2020 071 645

## Description

### FIELD OF INVENTION

The present invention relates to a method of subjecting cheese to acoustic sound with low frequency during maturation to control the development of flavors and/or to extend the shelf-life of the food. The invention is set out in the appended set of claims.

### BACKGROUND OF THE INVENTION

In the recent years, a number of methods for acoustic treatment of food have been developed.

For example, transmission of ultrasonic and megasonic sound waves into liquid food is widely known to facilitate processing, inactivate organisms, enhance chemical reactions, and for cleaning or degassing. Examples of such methods, which typically involve applying sweeping waves of sound in the ultrasound frequency range (i.e. between 20 kHz and 1 GHz) to cause acoustic cavitation, and related transducer assemblies are disclosed in WO 2013/184857 A1, US 2015/0359247 A1 and WO 2019/234485 A1. Method of modifying food systems by ultrasound are further reviewed in Carrillo-Lopez et al., Journal of Food Quality 2017, Article ID 5794931. However, while said methods may lead to acceptable results with respect to inactivation of bacteria (e.g. yeasts), homogenisation and mechanical effects resulting from disruption of protein structures or fragmentation of molecules, for example, they tend to require specialized equipment and/or may be detrimental to flavor development.

In this context, EP 1 875 813 A1 discloses a method of enhancing the flavor of food by exposing the same to acoustic waves in the audible range, preferably at a frequency of 400 to 800 Hz, more preferably at about 600 Hz for a duration of about 30 minutes. However, with the proposed method consistent enhancement of key flavors and effective control the development of flavors during brewing, maturation or fermentation of a food could not be achieved.

EP 0 477 774 A1 discloses a method, wherein a low frequency vibration is transmitted to a food during brewing, maturation or fermentation. Specifically, the vibration is essentially caused by a fluctuating musical signal including pink noise, i.e. a signal with a frequency spectrum having a power spectral density inversely proportional to the frequency of the signal, also referred to as a 1/f fluctuation. CN 103 205 354 B and US 2020/071645 A1 disclose methods including acousting treatment of responsive liquids to provoke a resonance and enhance agitation in the liquid container. However, it still remains desirable to provide a method and system which enable improved efficiency with respect to the yield of desirable flavors and flavor development control and ideally also prolonged shelf-life.

### SUMMARY OF THE INVENTION

The present invention solves these problems with the subject matter of the claims as defined herein. Further advantages of the present invention will be further explained in detail in the section below.

The present invention relates to a method of producing matured cheese, comprising: exposing the cheese to sound having a frequency of between 5 and 300 Hz during maturation, wherein the sound is a pure tone and wherein the cheese is exposed to said sound for more than 24 hours.

According to a preferred embodiment, the present invention relates to the use of the method of producing matured cheese according to any of claim 1 to 8 for extending the shelf-life of the matured cheese.

Preferred embodiments of the methods according to the present invention and other aspects of the present invention are described in the following description and the claims.

### BRIEF DESCRIPTION OF THE DRAWINGS

FIG. 1 is a schematic representation of an exemplary system used in a preferred embodiment of the present invention. The system *per se* is outside the the subject-matter of the claims.
FIG. 2 depicts a wooden box used for the acoustic treatment of cheese wheel samples.
FIG. 3A is a diagram showing the concentration of free amino acids measured in the cheese samples.
FIG. 3B is a diagram showing the concentration of bound amino acids measured in the cheese samples.

### DETAILED DESCRIPTION OF THE INVENTION

For a more complete understanding of the present invention, reference is now made to the following description of the illustrative embodiments thereof:

### Methods of producing matured cheese

The present invention relates to a method of producing matured cheese, comprising: exposing the cheese to sound having a frequency of between 5 and 300 Hz during maturation, wherein the sound is a pure tone and wherein the cheese is exposed to said sound for more than 24 hours.

The expression "maturation" is understood to encompass aging and/or ripening processes, wherein a food is left standing (typically under controlled conditions) over an extended period of time to aid in improving the flavor of the product.

Beside of the conventional definitions of maturation, the method of the present invention may alternatively comprise the acoustic treatment upon addition of microbial food cultures, which act on food products to alter their chemical composition, to provide additional flavors (as in blue cheese, for example) or to release gas (such as during a dough leavening process upon addition of baker's yeast) for example.

Under the aspect of enabling particularly high flavor yields, the sound has a frequency of between 5 and 300 Hz, preferably between 6 to 150 Hz, and further preferably between 7 and 100 Hz, and especially preferably between 8 and 50 Hz.

While it is in principle possible to use sound with varying or sweeping frequency and/or with interrupted exposure in the given frequency range (as would be the case with musical samples, for example), it has been surprisingly found that an exposure to pure tones has the strongest impact on flavor development and/or shelf life improvement and is thus employed in the method of the present invention. Unlike musical tones that are composed of the sum of a number of harmonically related sinusoidal components, a pure tone is understood to only contain one sinusoidal waveform.

Conventional methods which involve sonication with musical signals having a 1/f-fluctuation or high-frequency sound suggest that an exposure to sound over prolonged periods of time may have detrimental effects on the yield and development of desirable flavors. While in the present invention, the duration of the exposure to the low-frequency sound is not particularly limited, tests have surprisingly shown that optimal results may be achieved by extended sonication. Therefore, it is preferable that the food is exposed to said sound for at least 50% of the maturation duration, more preferably for at least 70% of the maturation duration. According to the invention, the cheese is exposed to the low frequency of between 5 and 300 Hz sound for more than 24 hours, preferably at least 3 days, and ideally at least 1 week, such as 1 month or more, for example.

During the acoustic treatment, one or more device(s) configured to generate said sound are to be placed in a suitable proximity to the food to ensure proper transmission of acoustic energy to the food substrate. The distance is not particularly limited and may be appropriately selected by the skilled artisan, depending on the operating sound pressure and the sound propagation medium, for example.

In a preferred embodiment, one or more devices configured to generate the sound as claimed may be placed in direct contact with the cheese during maturation. Further preferably, said device(s) may be inserted into the cheese, which can help to more uniformly expose the food to the applied sound.

Suitable devices for sound generation are not particularly limited and commonly known transducers capable of operating in the respective medium (e.g., in a liquid environment) and of generating acoustic waves at frequencies within the ranges described above may be used.

In a preferred embodiment, particularly when the sound generation device is placed in direct contact with or inserted into the cheese, the sound generation device comprises a transducer in combination with at least one sensor, and the method further comprises: detecting parameter variations in the cheese by the at least one sensor; and controlling the operation, output frequency and/or duration of sound generated by the transducer depending on the parameter variation detected by the at least one sensor. Such an operation enables manufacture of cheeses with consistent maturation and ageing levels, and which are optimized with respect to the quality and content of desirable flavors.

Various parameters may be chosen for detection. While not being limited thereto, the detected parameter may be selected from one or more of temperature, pH, density and analyte content, for example. In further preferred embodiments, said analyte may include water or a flavor compound. Accordingly, the water content or quality and/or concentration of key flavor compounds may be detected (e.g., by a miniature mass spectrometer (MMS) or by a moisture sensor), and the operation of the transducer may be adjusted if the sensor readings exceed predetermined threshold values for the concentration or indicate the presence of an analyte. In this context, the adjustment of the transducer operation may involve a variation in frequency or amplitude level (i.e. sound pressure) of the signal.

In a further preferred embodiment, the output frequency and/or duration of sound generated by the transducer or its operation may be controlled via an external control unit communicating wirelessly with the sound generation device, which remarkably simplifies the process and avoids the danger of contaminating the food by manual operation of the transducer.

Advantageously, the above-described method enables excellent control over the maturation process by exerting effective influence on bacteria and microbes, particularly those active in proteolytic and lipolytic mechanisms, and thereby improves the development and yield of desirable flavors and/or nutritionally beneficial components. However, in addition to these advantages, the method described above may also be used to prolong life of cheese while preserving a significant degree of nutritional quality and sensory characteristics

According to a preferred embodiment, the present invention therefore relates to the use of the method o producing matured cheese according to any of claims 1 to 8 for extending the shelf-life of the matured cheese.

Preferably, said methods complement or replace common preservation methods, which may comprise the addition of preservatives or a heat treatment (e.g. UHT processing or HTST pasteurization), which may potentially destroy valuable heat-sensitive ingredients present in the food. Therefore, it may be preferred that the method of extending the shelf-life does not include a step of adding preservatives or a heat treatment.

### Matured Food

From the foregoing, it is to be appreciated that the acoustically treated cheese may comprise improved contents of desirable flavors and simultaneously exhibit a prolonged shelf-life compared to conventionally matured cheese or cheese that has been heat-treated for preservation.

### System for Producing Matured Cheese

In the following example useful for understanding the invention, an exemplary system for carrying out the method according to the invention will be described. The system may comprise: a) a food-safe sound generation device comprising: a1) a sensor configured to detect parameter variations in the cheese when positioned in direct contact therewith; and a2) a low frequency transducer configured to transmit sound having a frequency of between 5 and 300 Hz to the cheese; and b) a control unit configured to read out the data detected by the sensor and to control operation of the transducer if the detected parameter reaches a predetermined target value; wherein the detected parameter is selected from one or more of temperature, pH, density and analyte content, the analyte being preferably water or a flavor compound. In a preferred embodiment, the control unit is in wireless communication with the sound generation device.

In general, the geometry of the sound generation device is not particularly limited, but may be appropriately selected to promote effective sound distribution throughout the cheese sample. Also, a plurality of sound generation devices may be employed fo a single food sample.

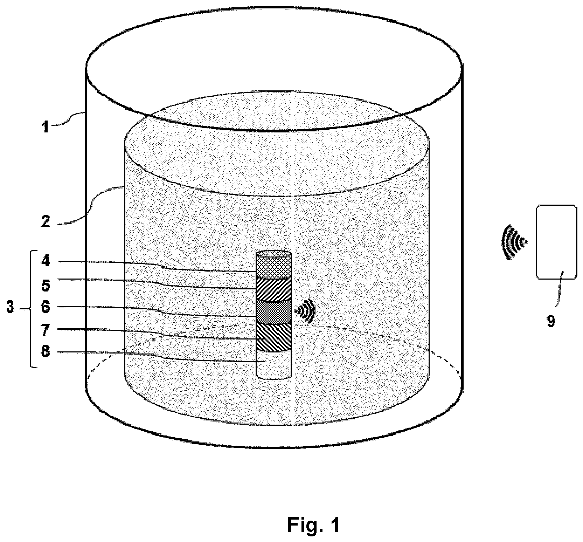

While not being limited thereto, a preferred embodiment of an exemplary system is illustrated in Fig. 1. Herein, cheese (2) is placed into a container (1) for maturation, and a food-safe sound generation device (3) is positioned in contact with or inserted into the cheese (2). The sound generation device (3) essentially comprises a low frequency transducer (4) configured to transmit sound having a frequency of between 5 and 300 Hz to the food. The sound generation device comprises one or more on-board sensor(s) (5) configured to detect or measure a physical property which may be relevant to the condition of the cheese (2) and/or its environment, such as temperature, pH, density and analyte content, for example. For example, a temperature sensor may be used to detect temperature variations inside or outside of the cheese (2) (e.g. within the container (1)). While not being limited thereto, examples of temperature sensors include BJT- or CMOS-based temperature sensors.

In a preferred embodiment, the sound generation device (3) further comprises one or more of a wireless transmitter/receiver (6), an on-board control circuit (7) and a power unit (8).

The wireless transmitter (6) may be configured to transmit measured sensor readings (i.e. raw data) or data processed in the on-board sensor system to a wireless network or another wireless-enabled device, such as the control unit (9).

The power unit (8) may include an energy storage device and/or an energy scavenging device, for example. In a further embodiment, the sound generation device may be powered by implementing a power receiver circuit configured to enable wireless power transmission based on inductive or capacitive coupling methods known in the art, which advantageously reduces the danger of contamination and simultaneously ensures long-term operation. The power requirements of the on-board electronics may be reduced by implementing software which enables low-duty cycle operation, wherein the sensor system is periodically initialized and either enters an emergency mode (e.g. if the sensor(s) detect(s) signals exceeding predetermined threshold levels) or enters a sleep mode (i.e. if no deviations from a predetermined optimum state are measured).

By the use of said system, the flavor of inferior quality cheese may be easily, safely and particularly efficiently enhanced with the ability to treat large volumes of cheese simultaneously.

### EXAMPLES

### Acoustic treatment

In one series of experiments, semi-hard cheese wheels were matured for approximately 8 months under permanent exposure of acoustic sound waves, i.e. a low-frequency sine wave of 25 Hz in Example 1, and a high-frequency sine wave of 1000 Hz in Comparative Example 2. As Comparative Example 1, a sample without acoustic treatment was used as a reference.

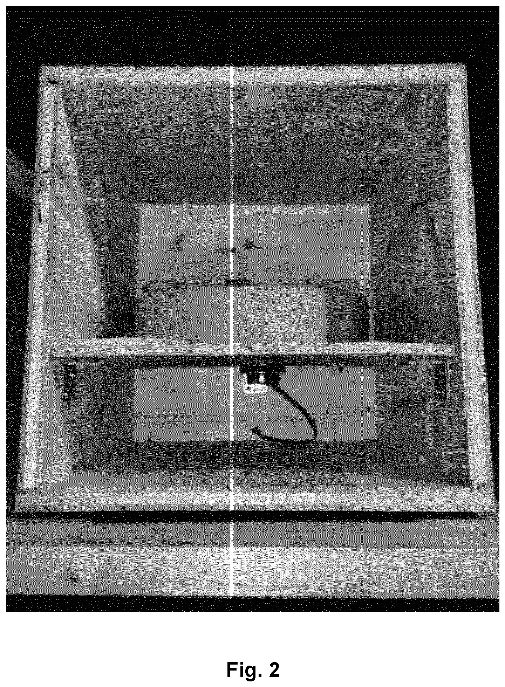

The cheese samples were matured in identical wooden boxes, an example of which is shown in Fig. 2. DAEX32QMB-4 Quad Feet Mega Bass Transducers were mounted underneath the wooden board onto which the cheese samples were placed. An 8-channel Monacor STA-1508 (1800W on 8 channels) system was used as an amplifier.

### Flavor analysis

In order to verify the influence of sound waves (high, low and low frequency) on the sensory and chemical properties of the sonicated products, key cheese flavoring substances were first determined quantitatively.

For quantitative aroma analysis, chemical compounds were selected as targets, which are known as key aroma components in Gruyère cheese (see Rychlik et al., International Dairy Journal 2001, 11, 895-901). The key flavors measured are listed in Table 1 below.

**TABLE 1: Aromatically active target molecules for quantitative analysis and their attributes**

| **Target Component** | **Aromatic Attribute** |
|---|---|
| Diacetyl | buttery |
| 2-Methylbutanal; 3-Methylbutanal | malty |
| Methional | cooked potato |
| Phenylacetaldehyde | honey-like |
| Ethylisobutyrate | fruity |
| 2-Heptanone | fruity, stinging |
| Dimethyltrisulfide | sulfurous |
| 2-Ethyl-3,5-dimethylpyrazine; 2-Ethyl-3,6-dimethylpyrazine | earthy |
| (E)-2-Nonenal | cardboard-like |
| (E,E)-2,4-Nonadienal; (E,E)-2,4-Decadienal | oily, greasy |
| δ-Decalactone | apricot |
| Phenylacetic acid | honey-like |
| Propionic acid | off-flavor, fruity |
| Isobutyric acid | off-flavor, cheese |
| Butyric acid | off-flavor, cheese |
| 2-Methylbutyric acid; 3-Methylbutyric acid | off-flavor, cheese |
| Hexanoic acid | goat |

The sample processing and quantification of these selected key aroma substances was essentially carried out according to the protocol used in Chetschik et al., J. Agric. Food Chem. 2019, 67(14), 3991-4001. 30 g of each sample to be examined were taken at identical positions of the examined cheese wheels, frozen with liquid nitrogen and pulverized using an agate mortar. The powder obtained was first mixed with dichloromethane. Thereupon, isotope-labeled standards were added, through which the selected key flavor components were quantitatively evaluated. After the addition of the internal standards, each cheese sample was extracted for 1 hour with constant stirring. The extract was then filtered and subjected to a distillation according to the solvent-assisted flavor evaporation (SAFE) method disclosed in Engel et al., Eur. Food Res. Technol. 1999, 209, 237-241, in which the volatile aroma substances were separated from non-volatile sample components. The samples were then concentrated and analysed by means of GCMS.

The results of the aroma analysis of the cheese samples examined are shown in Table 2. Three independent sample preparations were carried out on each sample. The concentrations of the individual aroma substances in the three different samples (Example 1: 25 Hz treatment; Comparative Example 1: no acoustic treatment;
Comparative Example 2; 1000 Hz treatment) are listed in Table 2 as average of 3 independent measurements.

**TABLE 2: Measured concentrations of target components**

| **Target Component** | **Concentration [µg/kg]** | | |
|---|---|---|---|
| | **Example 1** | **Comparative Example 1** | **Comparative Example 2** |
| Diacetyl | 67.8 | 29 | 97.9 |
| 3-Methylbutanal | 102 | 78.5 | 83.8 |
| 2-Methylbutanal | 92 | 58.9 | 55.8 |
| Methional | 332 | 264 | 236 |
| Phenylacetaldehyde | 120 | 91.4 | 97.3 |
| Ethylisobutyrate | 2.7 | 2.1 | 2.1 |
| 2-Heptanone | 156 | 172 | 198 |
| Dimethyltrisulfide | 2.9 | 11.3 | 13.5 |
| 2-Ethyl-3,5-dimethylpyrazine | 6.5 | 0.3 | 0.43 |
| 2-Ethyl-3,6-dimethylpyrazine | 0.29 | 0.47 | 0.38 |
| (E)-2-Nonenal | 11.9 | 13.6 | 13.6 |
| (E,E)-2,4-Nonadienal | 0.51 | 0.54 | 0.51 |
| (E,E)-2,4-Decadienal | 3.5 | 5 | 6.2 |

| **Target Component** | **Concentration [mg/kg]** | | |
|---|---|---|---|
| | **Example 1** | **Comparative Example 1** | **Comparative Example 2** |
| δ-Decalactone | 1.21 | 1.14 | 1.38 |
| Phenylacetic acid | 3.06 | 3.05 | 3.01 |
| Propionic acid | 1020 | 177 | 282 |
| Isobutyric acid | 133 | 77.1 | 89.2 |
| Butyric acid | 223 | 314 | 282 |
| 3-Methylbutyric acid | 9.52 | 12.9 | 10.2 |
| 2-Methylbutyric acid | 31.3 | 31.3 | 12.1 |
| Hexanoic acid | 30.5 | 42.4 | 42 |

The data demonstrates that the acoustic treatment with low frequency sound results in significantly higher concentrations of aldehydes (2- and 3-methylbutanal, methional and phenylacetaldehyde), 2-ethyl-3,5-dimethyl-pyrazine and propionic acid when compared compared to the samples of Comparative Examples 1 and 2.

### Amino Acid Analysis

In addition to the flavor characterization, free and bound amino acids in the samples of Example 1 and Comparative Examples 1 and 2 were determined quantitatively.

To quantify the free amino acids, 5-10 mg of a cheese sample was homogenized with 100 µl 0.1% trifluoroacetic acid. The homogenate was then diluted to a concentration of 10 mg/ml, centrifuged and 10 µl of supernatant were used for analysis (corresponding to a sample amount of 100 µg).

For the determination of the bound amino acids, 25 mg 6M hydrochloric acid were added to 1-3 mg of each cheese sample and hydrolysed under vacuum at 115 °C for 22 hours. 10 µg of the hydrolysed product was used for each analysis.

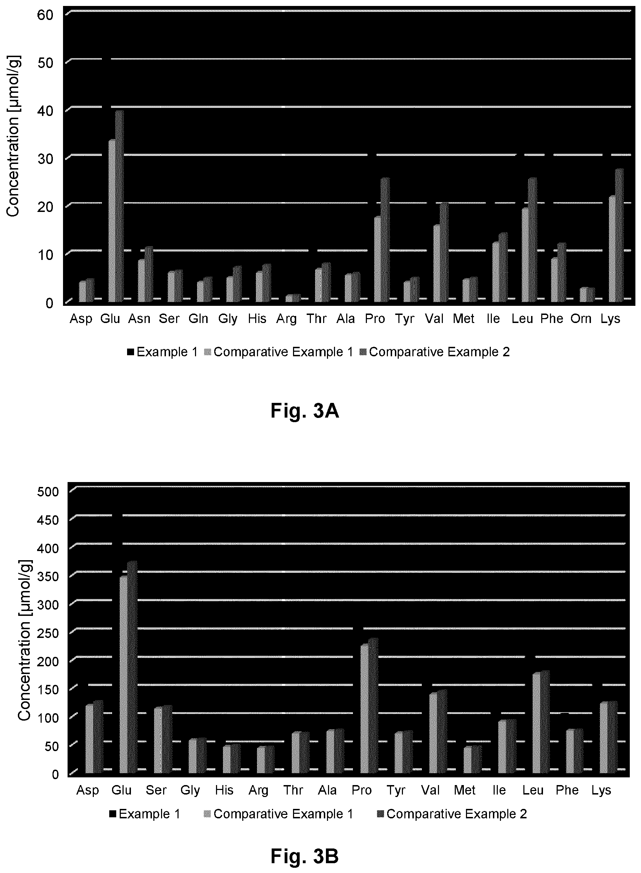

The free and bound amino acids were then determined using HPLC. For this purpose, the samples were mixed with PITC (phenylisothiocyanate), after the reaction, the mixture was dissolved in 50 µl buffer. 20 µl of the solution were analysed, using an external calibration. The results of the measurements are shown in Figures 3A and 3B.

When analysing the free amino acids, the highest levels for most analytes were observed with the samples of Example 1. The high concentrations of free amino acids, leucine (Leu), isoleucine (lle), methionine (Met) and phenylalanine (Phe) in Example 1 compared to the other cheese samples correlate well with the fact that the levels of aldehydes 2- and 3-methylbutanal, methional and phenylacetaldehyde were also found in the highest concentration in Example 1, since these free amino acids are known as precursors for the key flavor compounds mentioned above. Relative to Comparative Example 1, the high-frequency treated sample of Comparative Example 2 yielded only slightly higher concentrations for a large part of the amino acids.

When analysing the bound amino acids, trends similar to those of the free amino acids were observed (cf. Fig 3B). The measured concentrations of bound amino acids in Example 1 were substantially higher than those of Comparative Examples 1 and 2.

In conclusion, the analytical investigations of selected flavors and amino acids (free and bound) in the cheese wheels showed that in Example 1, which was acoustically treated with a low-frequency sine wave, the highest levels of free and bound amino acids were observed, in combination with significantly higher concentrations of 2- and 3-methylbutanal, methional, phenyl-acetaldehyde, 2-ethyl-3,5-dimethylpyrazine and propionic acid.

These results show that the acoustic treatment of food with low frequency in the course of the ripening process can have an influence on the chemical composition of the food, such as cheese.

Once given the above disclosure, many other features, modifications, and improvements will become apparent to the skilled artisan.

### REFERENCE NUMERALS

- 1: container
- 2: cheese
- 3: sound generation device
- 4: transducer
- 5: sensor(s)
- 6: on-board wireless transmitter/receiver
- 7: on-board control circuit
- 8: power unit
- 9: control unit

## Claims

1. Method of producing matured cheese, comprising:
exposing the food (2) to sound having a frequency of between 5 and 300 Hz during maturation, wherein the sound is a pure tone, and wherein the cheese is exposed to said sound for more than 24 hours.

2. Method of producing matured cheese according to claim 1, further comprising positioning a device (3) configured to generate said sound in direct contact with the food (2) before or during maturation.

3. Method of producing matured cheese according to any of claims 1 or 2, wherein the sound has a frequency of between 6 to 150 Hz, and preferably between 8 and 50 Hz.

4. Method of producing matured cheese according to any of claims 1 to 3, wherein the cheese is exposed to said sound for at least 50% of the maturation duration, preferably for at least 70% of the maturation duration.

5. Method of producing matured chese according to any of claims 1 to 4, wherein the cheese is exposed to said sound for at least 3 days, and preferably at least 1 week.

6. Method of producing matured cheese according to claim 2, wherein the sound generation device (2) comprises a sensor (5) and a transducer (4), and the method further comprises:
detecting parameter variations in the cheese (2) by the sensor (5); and
controlling the operation, output frequency and/or duration of sound generated by the transducer (4) depending on the parameter variation detected by the sensor (5).

7. Method of producing matured cheese according to claim 6, wherein the detected parameter is selected from one or more of temperature, pH, density and analyte content, the analyte being preferably water or a flavor compound.

8. Method of producing matured cheese according to any of claims 6 or 7, wherein the output frequency and/or duration of sound generated by the transducer (4) or its operation is controlled via an external control unit (9) communicating wirelessly with the sound generation device (3).

9. Use of the method of producing matured cheese according to any of claims 1 to 8 for extending the shelf-life of the matured cheese.

## Patentansprüche

1. Verfahren zur Herstellung von gereiftem Käse, umfassend:
die Behandlung des Lebensmittels (2) während der Reifung mit Schall, welcher eine Frequenz zwischen 5 und 300 Hz aufweist, wobei der Schall ein Sinuston ist, und wobei der Käse diesem Schall länger als 24 Stunden ausgesetzt ist.

2. Verfahren zur Herstellung von gereiftem Käse nach Anspruch 1, umfassend das Positionieren einer Vorrichtung (3) zur Erzeugung des Schalls in direktem Kontakt mit dem Lebensmittel (2) vor oder während der Reifung.

3. Verfahren zur Herstellung von gereiftem Käse nach einem der Ansprüche 1 oder 2, wobei der Schall eine Frequenz zwischen 6 und 150 Hz, vorzugsweise zwischen 8 und 50 Hz, aufweist.

4. Verfahren zur Herstellung von gereiftem Käse nach einem der Ansprüche 1 bis 3, wobei der Käse dem Schall für einen Zeitraum von mindestens 50 % der Reifungsdauer, vorzugsweise mindestens 70 % der Reifungsdauer, ausgesetzt wird.

5. Verfahren zur Herstellung von gereiftem Käse nach einem der Ansprüche 1 bis 4, wobei der Käse dem Schall für einen Zeitraum von mindestens drei Tagen, vorzugsweise mindestens einer Woche, ausgesetzt wird.

6. Verfahren zur Herstellung von gereiftem Käse nach Anspruch 2, wobei die Schallerzeugungsvorrichtung (2) einen Sensor (5) und einen Wandler (4) umfasst und das Verfahren ferner umfasst:
Erfassen von Parameterschwankungen im Käse (2) durch den Sensor (5); und
Steuern des Betriebs, der Ausgangsfrequenz und/oder der Dauer des vom Wandler (4) erzeugten Schalls in Abhängigkeit von der vom Sensor (5) erfassten Parameterschwankung.

7. Verfahren zur Herstellung von gereiftem Käse nach Anspruch 6, wobei der erfasste Parameter aus einem oder mehreren der folgenden Parameter ausgewählt wird: Temperatur, pH-Wert, Dichte und Analytgehalt, wobei der Analyt vorzugsweise Wasser oder ein Aromastoff ist.

8. Verfahren zur Herstellung von gereiftem Käse nach einem der Ansprüche 6 oder 7, wobei die Ausgangsfrequenz und/oder Dauer des vom Wandler (4) erzeugten Tons oder dessen Betrieb über eine externe Steuereinheit (9) gesteuert wird, die drahtlos mit der Tonerzeugungsvorrichtung (3) kommuniziert.

9. Verwendung des Verfahrens zur Herstellung von gereiftem Käse nach einem der Ansprüche 1 bis 8 zur Verlängerung der Haltbarkeit des gereiften Käses.

## Revendications

1. Procédé de production de fromage affiné, comprenant :
l'exposition de l'aliment (2) à un son d'une fréquence comprise entre 5 et 300 Hz durant l'affinage, dans lequel le son présente une tonalité pure, et dans lequel le fromage est exposé audit son durant plus de 24 heures.

2. Procédé de production de fromage affiné selon la revendication 1, comprenant en outre le positionnement d'un dispositif (3) configuré pour générer ledit son en contact direct avec l'aliment (2) avant ou durant l'affinage.

3. Procédé de production de fromage affiné selon l'une quelconque des revendications 1 ou 2, dans lequel le son présente une fréquence comprise entre 6 à 150 Hz, et préférablement entre 8 et 50 Hz.

4. Procédé de production de fromage affiné selon l'une quelconque des revendications 1 à 3, dans lequel le fromage est exposé audit son durant au moins 50 % de la durée d'affinage, préférablement durant au moins 70 % de la durée d'affinage.

5. Procédé de production de fromage affiné selon l'une quelconque des revendications 1 à 4, dans lequel le fromage est exposé audit son durant au moins 3 jours, et préférablement au moins 1 semaine.

6. Procédé de production de fromage affiné selon la revendication 2, dans lequel le dispositif de génération de son (2) comprend un capteur (5) et un transducteur (4), et le procédé comprend en outre les étapes consistant à :
détecter des variations de paramètre dans le fromage (2) par le capteur (5) ; et
à commander l'application, la fréquence de sortie et/ou la durée du son généré par le transducteur (4) en fonction de la variation de paramètre détectée par le capteur (5).

7. Procédé de production de fromage affiné selon la revendication 6, dans lequel le paramètre détecté est sélectionné parmi l'un ou plusieurs de la température, du pH, de la densité et de la teneur en un analyte, l'analyte étant préférablement l'eau ou un composé type agent aromatisant.

8. Procédé de production de fromage affiné selon l'une quelconque des revendications 6 ou 7, dans lequel la fréquence de sortie et/ou la durée du son généré par le transducteur (4) ou son application est contrôlée par l'intermédiaire d'une unité de commande externe (9) communiquant sans fil avec le dispositif de génération de son (3).

9. Utilisation du procédé de production de fromage affiné selon l'une quelconque des revendications 1 à 8 pour la prolongation de la durée de conservation du fromage affiné.
